(19) Europäisches Patentamt
European Patent Office
Office européen des brevets

(11) **EP 2 548 054 B1**

(12) **FASCICULE DE BREVET EUROPEEN**

(45) Date de publication et mention de la délivrance du brevet:
**14.10.2015 Bulletin 2015/42**

(21) Numéro de dépôt: **11704237.4**

(22) Date de dépôt: **18.02.2011**

(51) Int Cl.:
*G02B 5/32* (2006.01)          *G02B 27/01* (2006.01)
*G02B 27/10* (2006.01)

(86) Numéro de dépôt international:
**PCT/EP2011/052447**

(87) Numéro de publication internationale:
**WO 2011/113662 (22.09.2011 Gazette 2011/38)**

(54) **COMBINEUR DIFFRACTIF POUR DISPOSITIF D'AFFICHAGE TÊTE HAUTE COULEUR**

BRECHUNGSKOMBINIERER FÜR EINE HEADUP-FARBANZEIGEVORRICHTUNG

DIFFRACTIVE COMBINER FOR A COLOUR HEAD UP DISPLAY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2010 FR 1001068**

(43) Date de publication de la demande:
**23.01.2013 Bulletin 2013/04**

(73) Titulaires:
• **Delphi Technologies, Inc.**
  **Troy, MI 48007 (US)**
• **Université de Strasbourg**
  **67081 Strasbourg Cedex (FR)**

(72) Inventeurs:
• **MOUSSA, Hassan**
  **F-67400 Illkirch (FR)**
• **EL HAFIDI, Idriss**
  **F-67400 Illkirch-Graffenstaden (FR)**

(74) Mandataire: **Delphi France SAS**
**Patent Department**
**22, avenue des Nations**
**CS 65059 Villepinte**
**95972 Roissy CDG Cedex (FR)**

(56) Documents cités:
**EP-A2- 0 811 859          EP-A2- 1 801 666**
**JP-A- 2008 076 571        US-A1- 2003 210 467**
**US-A1- 2007 188 837**

**Description**

Domaine technique

La présente invention concerne un dispositif d'affichage tête haute (en anglais : « head up display ») notamment pour véhicule automobile. En particulier, l'invention concerne un combineur diffractif pour un tel dispositif, notamment pour l'affichage d'informations en couleur.

Arrière-plan technologique de l'invention

Un dispositif d'affichage tête haute comporte typiquement une unité de projection qui produit un faisceau lumineux destiné à être dirigé vers un combineur en vue de projeter des images, notamment des informations de fonctionnement ou de conduite du véhicule sous la forme d'une image virtuelle située dans le champ de vision du conducteur. Ce genre de dispositifs était initialement réalisé sur base des technologies dérivées d'applications aéronautiques. Leurs coûts de fabrication sont dès lors souvent importants, de nature à empêcher leur commercialisation et leur installation à plus grande échelle sur des véhicules de gamme basse ou moyenne.

Lesdits coûts résultent notamment des technologies utilisées, compliquées à mettre en oeuvre, et qui ne permettent de surcroît pas toujours une réplication en masse des combineurs avec une garantie suffisante de stabilité des caractéristiques optiques. C'est par exemple le cas pour le dispositif divulgué dans le document JP 1 004 8562, décrivant un système relevant d'un hologramme à modulation d'indices, dont la fabrication est basée sur l'utilisation de plaques photosensibles réalisées à partir d'une couche photosensible à base de gélatine déposée sur un substrat jouant le rôle de support mécanique. Un tel composant ne peut être fabriqué qu'à l'unité, car il implique un enregistrement réalisé de façon individualisée, et il n'a pas vocation à une fabrication de masse à un coût industriel raisonnable. Le composant holographique réalisé sur ce type de plaques photosensibles est au surplus sensible aux rayonnements UV, susceptibles de l'altérer, sauf à ajouter des couches protectrices. C'est également le cas pour le système divulgué dans le document EP 0467328, montrant un combineur à traitement optique volumique fabriqué sur la base de gélatines, et nécessitant plusieurs couches holographiques interagissant avec plusieurs longueurs d'onde, ce qui rend encore plus aléatoire la reproduction fiable des caractéristiques optiques du système. Ce système ne travaille de surcroît qu'en réflexion.

Un système fonctionnant en réflexion avec plusieurs longueurs d'onde est aussi décrit dans le document US 4930847, avec un procédé d'enregistrement utilisant à chaque fois une géométrie et une longueur d'onde différentes, basées sur des matériaux photosensibles de type gélatine présentant les limitations exposées ci-dessus.

Une autre structure à au moins deux couches est décrite dans le brevet US 6005714, la multiplication des couches augmentant la difficulté de maintenir, lors d'une fabrication de masse, une stabilité correcte de la fonction optique à assurer. La structure diffractive du document US 6005714 comprend un substrat transparent dans les faces opposées duquel sont formés des reliefs diffractifs. Les reliefs sont conjugués l'un à l'autre pour obtenir un effet diffractif sur la lumière réfléchie tandis que l'effet diffractif net sur la lumière passant par le substrat soit essentiellement annulé.

Au vu de la multitude d'informations susceptibles d'être affichées au conducteur d'un véhicule automobile, il existe aujourd'hui un besoin de projeter des images en couleur. Dans le contexte de la présente spécification, on entend par image « en couleur » ou image « plein couleur » (de l'anglais : « full colour image ») notamment une image obtenue par synthèse d'images monochromatiques dans les couleurs primaires (normalement rouge, vert et bleu). La superposition des images monochromatiques permet d'afficher les couleurs secondaires (cyan, magenta, jaune) ou toute autre couleur de l'espace chromatique (p.ex. le blanc). L'affichage d'images en couleur au moyen d'un combineur diffractif n'est pas un problème trivial, étant donné que l'angle de la déviation de la lumière transmise ou réfléchie par un réseau de diffraction optique dépend de la longueur d'onde de la lumière. Il en résulte qu'il faut faire en sorte que les images virtuelles des images monochromatiques formant l'image en couleur soient superposées correctement dans le champ de vision du conducteur, et que les images parasites soient placées en dehors du champs de vision de l'observateur.

Le combineur divulgué dans le document EP 0 467 328 déjà mentionné ci-dessus comprend un réseau de diffraction optique holographique multiplexé pour diffracter, dans la même direction, de la lumière d'une première longueur d'onde et d'une deuxième longueur d'onde incidente sur le réseau de diffraction optique selon une direction d'incidence. En alternative, EP 0 467 328 propose un « réseau de diffraction optique multi-couches », c.-à-d. plusieurs réseaux de diffraction optique holographiques empilés et collés ensemble, chacune des couches étant associée à une longueur d'onde particulière. Les deux alternatives souffrent d'abord du grand désavantage que les réseaux de diffraction optique sont réalisés sur des plaques photosensibles (sensibles aux rayonnements UV), ce qui, en pratique, rend nécessaire l'ajout de couches protectrices. Or le fait de devoir utiliser plusieurs couches collées ou laminées ensemble complique la production du combineur. Il faut notamment prendre des mesures garantissant le bon alignement des différentes couches au moment de l'assemblage. Un autre problème très important est l'homogénéité des différentes couches, surtout par rapport à leur vieillissement. Il y a le risque que les couches se décollent ou que les propriétés optiques de l'une ou de l'autre couche se dégradent. Il s'ensuit que la mise en oeuvre d'un combineur tel que décrit dans le document EP 0467328 est difficile et le résultat sera toujours un compromis plus ou moins réussi entre plusieurs paramètres à optimiser. Il faut noter en outre, le combineur divulgué présente une sélectivité pour deux longueurs d'onde. Pour pouvoir fonctionner en mode « plein couleur », il faudrait au moins trois couches de, réseaux de diffraction optique ou un réseau au moins triplexé. Une telle adaptation entraînerait donc une complexité encore plus importante. Aussi, dans les documents cités ci-dessus le contrôle de l'efficacité de diffraction est empirique et très limité, ce qui implique une difficulté pour l'uniformisation de niveau de luminance de l'image virtuelle obtenue.

Le document US 2007/188837 A1 divulgue un dispositif d'affichage tête haute comprenant un combineur diffractif. Le document US 2003/210467 A1 divulgue un combineur de trois longueurs d'ondes d'un afficheur couleur portable.

La présente invention remédie à ces insuffisances, et propose une solution qui permet la fabrication en grande série d'un combineur diffractif compatible avec un dispositif d'affichage tête haute « plein couleur ».

<u>Résumé de l'invention</u>

Il est proposé un combineur diffractif pour dispositif d'affichage tête haute, comprenant un premier réseau de diffraction optique configuré pour diffracter, dans une direction de diffraction, de la lumière d'une première longueur d'onde incidente sur le premier réseau de diffraction optique selon une direction d'incidence, un deuxième réseau de diffraction optique configuré pour diffracter, dans la même direction de diffraction, de la lumière d'une deuxième longueur d'onde incidente sur le deuxième réseau de diffraction optique selon la direction d'incidence. Le combineur comprend un support en matière transparente ayant une première et une deuxième face opposées sur lesquelles sont formés en relief respectivement les premier et deuxième réseaux de diffraction optique. Au moins un des premier et deuxième réseaux de diffraction optique est réalisé comme réseau de diffraction optique multiplexé en longueur d'onde configuré pour diffracter, dans la direction de diffraction, de la lumière d'une troisième longueur d'onde incidente sur l'au moins un des premier et deuxième réseaux de diffraction optique selon la direction d'incidence.

En d'autres termes, les premier et deuxième réseaux de diffraction optique sont configurés de telle sorte que les directions de propagation de la lumière diffractée dans le premier ordre des première, deuxième et troisième longueurs d'onde en sortie du combineur diffractif soient égales pour la direction d'incidence donnée. L'adaptation des réseaux à la ou aux longueurs d'onde leur associées s'effectue de prime abord par l'adaptation voire la modulation du pas de réseau. Au sens de la présente spécification, un réseau multiplexé peut être compris comme deux réseaux, adaptés chacun à la diffraction d'une longueur d'onde dans la direction voulue (pour un angle d'incidence donné), réalisés à l'aide d'un seul réseau à pas modulé. Dans le contexte de la présente spécification, il on pourrait donc alternativement parler de réseau duplexé.

Le combineur selon l'invention permet donc d'obtenir l'effet de trois réseaux de diffraction optique simples (non multiplexés) sur un seul support réalisé en une seule pièce. On réduit ainsi de manière substantielle la complexité du combineur notamment par rapport à celui décrit dans la demande EP 0467328. Le fait que les réseaux soient réalisés en relief sur les faces opposées permet de s'affranchir, dans le combineur, de matières photosensibles devant être protégées de manière efficace. On a donc la possibilité de réaliser un combineur monocouche (c.-à-d. sur un support unique), surmontant ainsi les problèmes de compatibilités de matériaux et de vieillissement différentiel de l'état de l'art. D'autre part, le relief permet de contrôler de manière très précise l'efficacité de diffraction.

De préférence, la lumière de la première longueur d'onde est de la lumière verte (longueur d'onde comprise dans la plage de 506 à 570 nm), la lumière de la deuxième longueur d'onde est de la lumière rouge (longueur d'onde comprise dans la plage de 630 à 700 nm) et la lumière de la troisième longueur d'onde est de la lumière bleue (longueur d'onde comprise dans la plage de 430 à 490 nm). Des choix particulièrement avantageux des longueurs d'onde seraient 532 nm, 633 nm et 445 nm, respectivement 532 nm, 633 nm et 432 nm.

Le support du combineur diffractif selon l'invention est de préférence réalisé en verre ou en matière plastique transparente, par exemple en PET (polyéthylène téréphtalate), PMMA (polyméthacrylate de méthyle), en PC (polycarbonate), en PVB (polyvinyle de butyral) ou autres. Les premier et deuxième réseaux de diffraction optique sont de préférence configurés de sorte à ce que ladite direction de diffraction corresponde au premier ordre de diffraction pour les première, deuxième et troisième longueurs d'onde.

Selon un mode de réalisation avantageux du combineur, les premier et deuxième réseaux de diffraction optique sont configurés pour réaliser une fonction de lentille de même distance focale pour les première, deuxième et troisième longueurs d'onde.

Le procédé de fabrication des réseaux du combineur comprend de préférence celui de la nano-lithographie par interférence laser. Par cette technique, on produit dans une couche photosensible, à l'aide d'une source laser, des franges d'interférence correspondant au réseau que l'on veut obtenir. Ensuite, on procède à une étape de gravure chimique de façon à obtenir des variations de relief dans la couche photosensible. Ces variations de relief sont ensuite transférées à un moule. Pour le combineur selon l'invention on exécute ce procédé pour les deux faces. Les combineurs peuvent ensuite être produits en masse à l'aide des deux moules, correspondant chacun à une face, p.ex. par injection ou par embossage.

Dans un procédé alternatif, on pourrait générer et sauvegarder les reliefs des réseaux à réaliser de manière numérique et les transposer aux moules respectifs par gravure ou usinage commandé numériquement. Dans la suite nous décrirons de manière plus détaillée le procédé de fabrication d'un réseau de diffraction optique simple ou multiplexé par nano-lithographie par interférence laser. On suppose un faisceau lumineux à n, n≥1, longueurs d'onde $\lambda_i$, i=1 à n, qui est envoyé vers le combineur sous un angle d'incidence $\ominus_p$. Le cas n=1 correspond à un réseau simple, c.-à-d. non multiplexé. Le procédé comprend les étapes suivantes:

a) dépôt d'une couche photosensible d'épaisseur uniforme sur une surface plane d'un substrat solide (p.ex. du verre ou du quartz) ;
b) insolation sur la couche photosensible des franges d'interférence due à l'interférence de deux faisceaux lumineux R1 et R2 provenant d'une source laser ;
c) transformation des zones insolés correspondant aux franges d'interférence en variations de relief dans la couche photosensible et fabrication d'un moule reproduisant ces variations ; et
d) utilisation dudit moule pour transférer la structure diffractive en relief du substrat sur un élément plastique transparent homogène constituant le combineur diffractif.

L'étape b) est réalisée n fois avant l'étape c), chaque fois à partir de deux faisceaux lumineux R1 et R2 provenant d'une même source laser de longueur d'onde $\lambda_e$, avec un angle $\ominus_i$, i=1 à n, entre le faisceau R1 et le faisceau R2 égal à

$$\theta_i = \arcsin\left(\frac{\lambda_c}{\lambda_i} \cdot \sin(\theta_p)\right). \qquad \textbf{(Eq. 1)}$$

Au bout de n>1 étapes d'insolation l'interférence des faisceaux aura généré un réseau à pas variable, correspondant à la superposition de différents réseaux simples.

L'équation 1 ci-dessus assure que la diffraction de la lumière des longueurs d'onde $\lambda i$ ait lieu dans la même direction, pour un angle d'incidence commun. En d'autres mots, les pas sont choisis de manière à superposer les images associées aux ordres un des trois longueurs d'ondes. Un choix judicieux des angles d'incidence $\ominus p$ et de diffraction permet de réaliser un écart angulaire entre le premier ordre de diffraction et les ordres de diffraction autres que le premier ainsi que la lumière transmise ou réfléchie (ordre 0). Il faut noter qu'à l'utilisation du combineur diffractif, chacun des trois réseaux simples (dont au moins deux sont réunis dans le réseau multiplexé) interagit avec toutes les longueurs d'onde présentes dans le faisceau lumineux émis par l'unité de projection. On observe donc des images virtuelles parasites dues soit à des ordres de diffraction autres que le premier, soit à l'interaction d'un réseau avec une longueur d'onde pour laquelle il n'est pas optimisé. Le fait d'assurer un écart angulaire entre le premier ordre de diffraction et les ordres de diffraction autres que le premier permet cependant d'écarter les images virtuelles parasites du champ de vision de l'utilisateur.

Pour obtenir un effet de lentille (permettant de placer l'image virtuelle à une distance prédéterminée du combineur diffractif), dans chacune des étapes b) l'un des faisceaux interférents est choisi divergent et présentant un front d'onde sphérique et l'autre est choisi comme une onde à front plane. Les franges d'interférence ainsi obtenues forment des courbes.

Les étapes a)-c) du procédé permettent de réaliser des matrices pour la fabrication de moules permettant la fabrication de combineurs en grandes séries. Ces matrices sont constituées d'un substrat, en matériau rigide, sur lequel est déposée une couche photosensible sensible à la longueur d'onde de la source laser utilisée, qui est toujours la même, seul l'angle entre les deux faisceaux étant modifié d'une étape b) à l'autre.

Les deux faisceaux lumineux provenant de la même source sont envoyés sur la surface plane de la couche photosensible, provoquant des franges d'interférence sur la totalité de la surface à exposer. L'existence de ces interférences conduit à une insolation variable de la surface de la couche photosensible, qui est ensuite exposée à une substance chimique ayant la propriété de dissoudre la matière photosensible selon son degré d'insolation. Il se produit par conséquent une gravure chimique, dans la mesure où les franges d'interférence se transforment en variations de relief après dissolution de certaines parties de la couche de matériau photosensible exposée. Il est à noter que le contrôle de la profondeur de relief sur la surface de la matrice dépend du temps de pose à l'enregistrement ainsi que de la durée de la gravure chimique. On note que pour une durée de gravure longue, les reliefs des franges sont d'allure pratiquement sinusoïdale, alors qu'en cas d'application plus brève, les crêtes extérieures ont une allure plutôt arasée.

L'exposition sous une pluralité d'angles (pour l'un des deux faisceaux) conduit en l'occurrence à la possibilité de fabrication d'un combineur à réseau multiplexé en surface.

Après la gravure chimique, la surface en relief fait l'objet d'un dépôt d'une couche mince conductrice, permettant par la suite d'appliquer des procédés d'électroforming pour obtenir un moule (p.ex. en nickel).

Pour la production d'un combineur selon l'invention, il faut deux parties de moules : une première pour reproduire le réseau diffractif sur la première face du combineur, une deuxième pour le réseau diffractif sur la deuxième face, au moins un des deux réseaux étant un réseau multiplexé. Le moule obtenu est enfin utilisé pour transférer les structures diffractives en relief sur un élément en matière plastique transparente par des moyens de production en masse tels que l'embossage ou l'injection.

Il est ainsi possible d'obtenir un combineur à support unique en matière plastique transparente, dont les structures diffractives sont gravées dans les deux faces.

L'utilisation d'une onde à front sphérique comme l'un des deux faisceaux d'écriture dans les différentes étapes b), permet de réaliser une fonction de lentille. La distance entre le centre des fronts d'onde et la couche photosensible est choisie, à chaque étape b) de sorte à ce qu'on obtienne une distance focale égale pour toutes les différentes longueurs d'onde visées.

Un aspect de l'invention concerne un dispositif d'affichage tête haute « plein couleur ». Un tel dispositif comprend une unité de projection apte à projeter un faisceau lumineux contenant de la lumière d'une première longueur d'onde, de la lumière d'une deuxième longueur d'onde et d'une troisième longueur d'onde à partir d'une image en couleur produite par synthèse additive d'images monochromatiques de couleurs différentes, dont chacune correspond à respectivement une desdites longueurs d'onde. Le dispositif d'affichage tête haute comprend en outre un combineur diffractif tel que décrit ci-dessus, positionné par rapport l'unité de projection de sorte à recevoir le faisceau lumineux projeté par l'unité de projection selon la direction d'incidence et à diffracter au moins une partie de la lumière des première, deuxième et troisième longueurs d'onde du faisceau lumineux dans la direction de diffraction, pour ainsi créer dans le champ de vision d'un utilisateur une image virtuelle en couleur de l'image produite par l'unité de projection grâce à la superposition des images monochromatiques correspondant aux trois longueurs d'onde.

On notera que la luminance de l'unité de projection et l'efficacité de diffraction du combineur pour chacune des différentes couleurs peuvent être adaptées les unes aux autres de sorte à garantir un mélange de couleurs bien pondéré dans l'image virtuelle ainsi qu'une luminance de celle-ci qui est adaptée aux besoins de l'application.

Avantageusement, le réseau de diffraction optique multiplexé est configuré pour dévier la lumière verte et bleue en direction de l'utilisateur. L'autre réseau de diffraction optique est de préférence un réseau simple (non multiplexé) configuré pour dévier la lumière rouge dans ladite direction. On note que le multiplexage affecte l'efficacité de diffraction pour les longueurs d'onde concernées. L'efficacité de diffraction à la longueur d'onde $\lambda_1$ d'un réseau multiplexé pour deux longueurs d'onde $\lambda_1$ et $\lambda_2$ sera normalement inférieure à celle d'un réseau optimisé pour $\lambda_1$ seulement. On considère avantageux le choix du bleu et du vert pour le réseau multiplexé pour les raisons suivantes :

La sensitivité de l'oeil humain au vert est plus élevée que sa sensibilité au rouge et au bleu aussi bien dans des conditions de faible éclairage (vision scotopique) que dans des conditions de jour (vision photopique).

Le bleu est la couleur la moins présente dans la nature. Par conséquent, une luminance même faible dans le bleu permet normalement d'avoir un bon contraste entre l'image virtuelle et son arrière-plan.

Il s'ensuit qu'une luminance plus élevée dans le rouge est considérée comme avantageuse. On réserve donc le réseau non multiplexé au rouge, tandis que le réseau multiplexé est adapté pour la diffraction de la lumière verte et bleue. Cette configuration permettra en outre d'utiliser des sources de lumière rouge, bleu et verte de même intensité. Il faut cependant noter que ce choix de distribution des réseaux n'est pas unique ; il peut varier selon les exigences relatives à l'environnement extérieur et le niveau de luminance exigé pour chaque couleur. Il est donc envisageable de réaliser un réseau multiplexé pour le bleu et le rouge sur la première face et un réseau simple pour le vert sur la deuxième face du combineur. Selon les besoins, il est aussi possible de réserver le réseau multiplexé pour le vert et le rouge le réseau simple pour le bleu.

De préférence, les premier et deuxième réseaux de diffraction optique du combineur diffractif sont configurés pour positionner l'image virtuelle à une distance comprise dans la plage de 1 à 5 m du combineur diffractif. Pour une distance donnée entre le combineur et l'unité de projection, on obtient cette caractéristique par un choix approprié de la distance focale réalisée par la fonction lentille du combineur diffractif.

Les premier et deuxième réseaux de diffraction optique du combineur diffractif sont avantageusement ajustés au positionnement du combineur diffractif de sorte à écarter des images virtuelles parasites du champ de vision de l'utilisateur. De préférence, la direction d'incidence et la direction de diffraction forment entre elles un angle supérieur à 30°, p.ex. supérieur à 40° pour ainsi placer les images virtuelles parasites hors du champ de vision de l'utilisateur.

Selon un mode de réalisation préféré du dispositif d'affichage tête haute, le combineur diffractif est agencé pour fonctionner en transmission. Alternativement, le combineur diffractif peut aussi être agencé pour fonctionner en réflexion. Le combineur diffractif peut alors comprendre une ou plusieurs couches de réflexion optique, par exemples des couches partiellement réfléchissantes ou dichroïques, adaptées pour les longueurs d'onde utilisées dans l'unité de projection. Dans une configuration en réflexion, le combineur peut être intégré dans une couche plastique du pare-brise.

Dans ce cas, les caractéristiques de réflexion sont supportées par le pare-brise et non pas par le combineur.

Si les caractéristiques réfléchissantes ne sont pas supportées par pare-brise, il est possible de doter le combineur d'une couche réfléchissante déposée sur la face du combineur qui est la plus éloignée de l'utilisateur.

Les efficacités de diffraction du combineur diffractif pour les première, deuxième et troisième longueurs d'onde sont de préférence choisies en fonction du niveau de luminance de l'image virtuelle en couleur et/ou en fonction de la pondération des couleurs correspondant aux première, deuxième et troisième longueurs d'onde dans l'image virtuelle: On peut notamment ajuster les efficacités de diffraction du combineur diffractif par contrôle de la profondeur des reliefs des premier et deuxième réseaux de diffraction optique.

Brève description des dessins

D'autres particularités et caractéristiques de l'invention ressortiront de la description détaillée de quelques modes de réalisation avantageux. présentés ci-dessous, à titre d'illustration, avec référence aux dessins annexés. Ceux-ci montrent:

Fig.1 : un schéma de coupe d'un combineur diffractif selon l'invention ;
Fig.2 : un schéma de principe d'un dispositif d'affichage tête haute employant le combineur de la figure 1 ;
Fig.3: un schéma illustrant le principe de réalisation d'un combineur diffractif par photolithographie par interférence laser ;
Fig. 4 : une illustration d'un dispositif d'affichage tête haute avec un combineur diffractif agencé en transmission ;
Fig. 5 : une illustration d'un dispositif d'affichage tête haute avec un combineur diffractif agencé en réflexion ;
Fig. 6 : une illustration d'un dispositif d'affichage tête haute avec un combineur diffractif intégré dans le pare-brise ;
Fig. 7 : un schéma de la géométrie d'enregistrement par photolithographie par interférence laser.

Description des modes de réalisation préférés

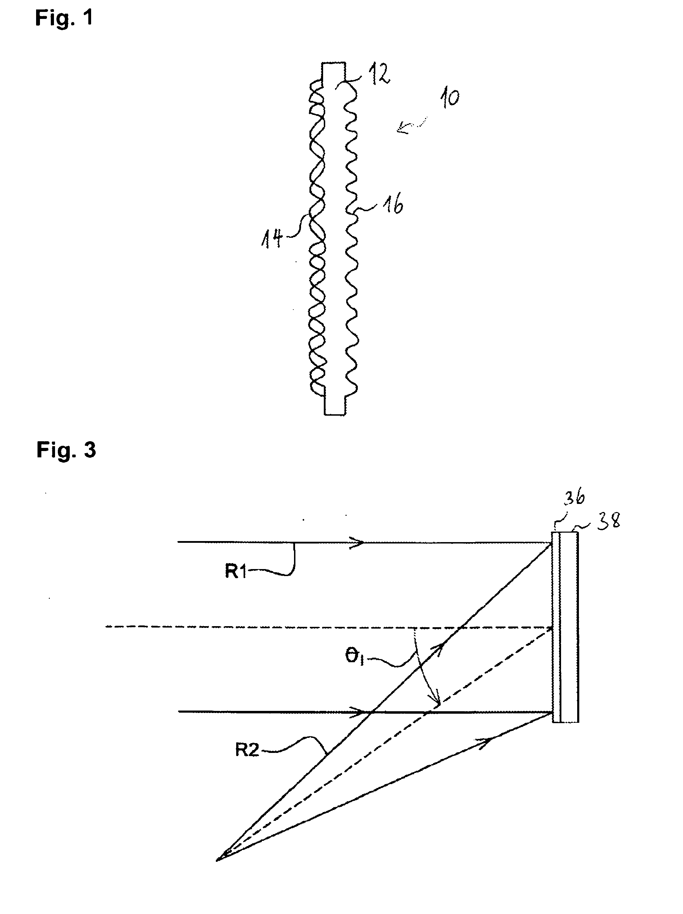

La figure 1 montre schématiquement une coupe d'un combineur diffractif 10 pour un dispositif d'affichage tête haute « plein couleur ». Le combineur 10 comprend un corps de support 12 en matière plastique, p.ex. du PMMA, du PC, du PET ou du PVB. Le combineur 10 comprend un premier 14 et un deuxième 16 réseau de diffraction optique formés en relief respectivement sur la première et la deuxième face du corps de support 12. Notons que sur la figure 1 les dimensions du combineur 10 ne sont pas à l'échelle ; notamment l'épaisseur du corps de support 12 et l'amplitude (ou la profondeur) des reliefs sont exagérées. L'épaisseur du combineur est de préférence comprise dans la plage de 0,25 à 3 mm. La profondeur des réseaux en relief est de préférence comprise dans la plage de 100 à 600 nm.

Le premier réseau de diffraction optique 14 est un réseau multiplexé, tandis que le deuxième 16 est un réseau simple (non multiplexé).

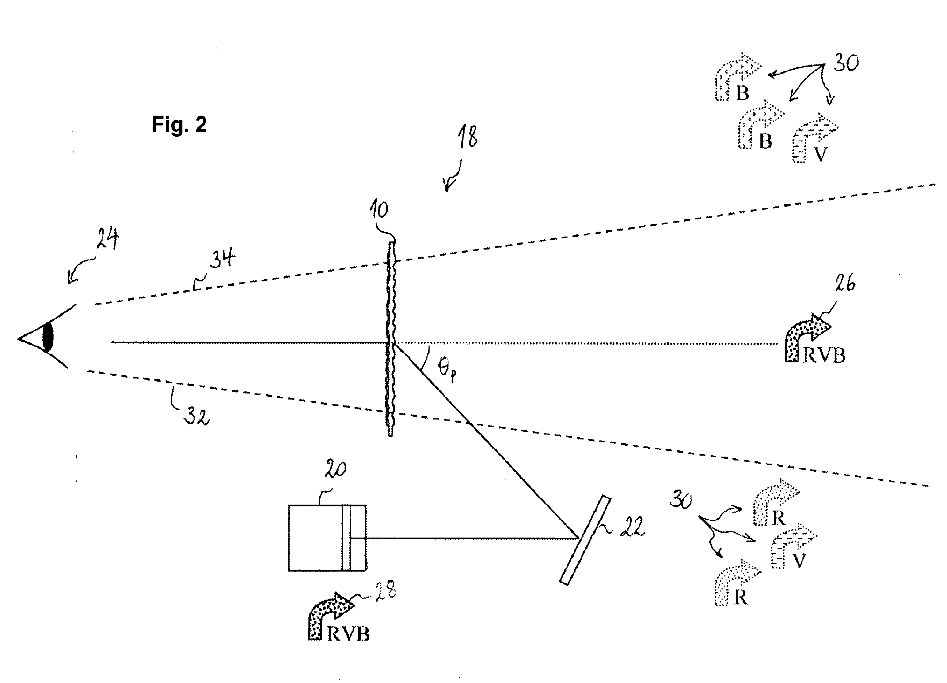

Pour l'explication de la configuration des réseaux de diffraction optique 14, 16 et le fonctionnement du combineur diffractif 10, référence est faite à la figure 2. Celle-ci montre schématiquement un dispositif d'affichage tête haute 18 comprenant une unité de projection 20, le combineur 10 et éventuellement un ou plusieurs éléments optiques (illustrés par le miroir 22) pour guider le faisceau lumineux émis par l'unité de projection 20 sur le combineur 10.

L'unité de projection 20 comprend par exemple un écran à cristaux liquides « plein couleur » avec rétro-éclairage par sources de lumière cohérente, de préférence des diodes diodes laser. L'image source est formée sur un afficheur (une couche de diffusion optique) par synthèse additive des images monochromatiques rouge, verte et bleue produites par les pixels.

Le faisceau lumineux produit par l'unité de projection 20 est dirigé sur le combineur soit directement soit au moyen d'un système optique. Le faisceau lumineux rencontre le combineur sous l'angle d'incidence $\ominus_p$ (le rayon central du faisceau étant pris comme référence). La couche de diffusion optique de l'unité de projection 20 est de préférence choisie de sorte à ce que l'angle d'ouverture de l'unité de projection 20 (l'angle de divergence du faisceau lumineux) corresponde plus ou moins à l'angle que sous-tend le combineur diffractif 10.

Le faisceau lumineux émis par l'unité de projection contient donc de la lumière d'une première longueur d'onde correspondant au rouge (p.ex. 633 nm), de la lumière d'une deuxième longueur d'onde correspondant au vert (p.ex. 532 nm) et d'une troisième longueur d'onde correspondant au bleu (p.ex. 432 ou 445 nm). L'angle d'incidence $\ominus_p$ est donc le même pour les trois longueurs d'onde impliquées.

Un combineur diffractif conventionnel, doté d'un seul réseau de diffraction optique simple, dévierait la lumière du faisceau d'un angle dépendant de la longueur d'onde. Par conséquent, un observateur verrait des images virtuelles rouge, verte et bleue décalées les unes par rapport aux autres. Pour cette raison, le combineur 10 comprend un premier réseau de diffraction optique pour le rouge, ainsi qu'un réseau de diffraction optique multiplexé pour le vert et le bleu, configurés de telle sorte que la diffraction de premier ordre du rouge, respectivement du vert, respectivement du bleu ait lieu dans la même direction. Un utilisateur 24 (p.ex. le conducteur d'un véhicule automobile équipé du dispositif d'affichage tête haute) voit donc une image virtuelle en couleur 26 de l'image source 28. La distance de l'image virtuelle en couleur 26 du combiner diffractif 10 dépend du trajet de l'image source 28 ainsi que de la distance focale d'une éventuelle lentille réalisée par le combiner diffractif. Le dispositif d'affichage tête haute 18 est de préférence configuré de sorte à ce que l'image virtuelle se situe à une distance entre 1 et 5 m du combiner diffractif 10.

En fait, le combiner diffractif 10 assume la fonction de trois réseaux simples, dont chacun est configuré pour dévier une couleur particulière dans la direction voulue. Dans le combiner 10, deux de ces réseaux simples sont réalisés de manière multiplexée sur la première face du corps de support, tandis que le troisième se trouve sur la face opposée (la deuxième face). Evidemment, chacun de ces réseaux interagit avec toutes les longueurs d'onde présentes dans le faisceau lumineux émis par l'unité de projection 20. On observe donc des images virtuelles parasites 30 (respectivement rouges, vertes et bleues) de part et d'autre de l'image virtuelle 26 en couleur. On choisit donc l'angle d'incidence $\ominus_p$, l'angle de déviation, le pas des réseaux de diffraction optique, la taille du combiner etc. de sorte à écarter les images virtuelles parasites 30 du champ de vision de l'utilisateur 24. Dans la figure 2, la limite du champ de vision de l'utilisateur est illustrée par les lignes discontinues 32 et 34.

Notons que dans le combiner diffractif des figures 1 et 2 le réseau de diffraction optique multiplexé 14 est celui qui dévie la lumière verte et la lumière bleue en direction de l'utilisateur 24. L'autre réseau de diffraction optique 16 le réseau simple (non multiplexé) qui dévie la lumière rouge dans ladite direction. Cette réalisation du combiner diffractif 10 fournit une meilleure efficacité de diffraction (en direction de l'utilisateur) pour la lumière rouge que pour la lumière verte et bleue. Concrètement, on peut aisément obtenir, dans l'image virtuelle, une luminance dans le rouge qui est le double de celle dans le vert ou le bleu. Etant donné que la sensitivité de l'oeil humain au vert est plus élevée que sa sensibilité au rouge et au bleu aussi bien dans des conditions de faible éclairage (vision scotopique) que dans des conditions de jour (vision photopique) et que le bleu est la couleur la moins présente dans la nature, une composition pondérée est donc obtenue avec des sources lumineuses dans le bleu, le vert et le rouge, de même intensité optique. Evidemment, si les sources lumineuses de l'unité de projection utilisée sont de puissance inégale, on peut choisir une configuration différente du combiner diffractif.

La figure 3 illustre le procédé de fabrication du combiner diffractif 10 par nano-lithographie par interférence laser. Pour chacun des réseaux, une matrice est d'abord enregistrée. A la figure 3, les rayons R1 et R2 représentent respectivement les rayons objets et les rayons de référence. Les deux rayons produisent des franges dans une couche de résine photosensible 36 appliquée sur un substrat 38 (en quartz, silicium, verre ou autre). Les interférences de R1 et R2 dans la couche photosensible 36 permettent d'insoler des zones précises, ce qui modifie la solubilité de la résine dans ces zones. Les zones exposées de la résine photosensible deviennent ainsi plus ou moins solubles par rapport aux autres zones. Une gravure chimique permet ensuite la suppression des zones non insolées (ou insolées selon le type de la résine photosensible : négative ou positive) de manière à obtenir une structure diffractive de surface.

L'angle $\theta_i$ entre R1 et R2 est ajusté selon la formule :

$$\theta_i = \arcsin\left(\frac{\lambda_e}{\lambda_i} \cdot \sin(\theta_p)\right).$$

où $\ominus_p$ correspond à l'ange d'incidence du faisceau lumineux provenant de l'unité de projection, $\lambda_e$ est la longueur d'onde des faisceaux utilisés pour l'enregistrement, $\lambda_i$ la longueur d'onde de la lumière à diffracter.

Pour un angle d'incidence $\ominus_p$ de 32°, en assumant la lumière doit être déviée le long d'un axe perpendiculaire au combiner diffractif et en posant une longueur d'onde d'écriture $\lambda_e$=406 nm, on obtient, par exemple :

| Couleur | $\lambda_i$ | $\theta_i$ |
|---------|-------------|------------|
| Bleu    | 445 nm      | 28,9°      |
| Vert    | 532 nm      | 23,8°      |
| Rouge   | 633 nm      | 19,8°      |

Pour enregistrer le réseau de diffraction optique non multiplexé 16, on génère donc la matrice en faisant interférer les faisceaux R1 et R2 ($\lambda_e$=406 nm) sous l'angle de 19,8°, R1 étant perpendiculaire à la couche photosensible. Ensuite, on passe à la gravure chimique et on transpose le relief obtenu dans une première partie du moule.

Pour enregistrer le réseau de diffraction optique multiplexé 14, on génère une autre matrice, en faisant interférer les faisceaux R1 et R2 ($\lambda_e$=406 nm) sous l'angle de 23,8°, R1 étant perpendiculaire à la couche photosensible. Ensuite, on passe à l'angle de 28,9° (R1 restant perpendiculaire à la couche photosensible). Après la gravure chimique, on transpose le relief obtenu dans une deuxième partie du moule.

Le combineur diffractif est finalement réalisé en matière plastique transparente par moulage par injection ou par embossage à l'aide des première et deuxième parties du moule.

Dans le montage de la figure 3, le faisceau R1 est normal à la surface de la couche photosensible. Il en résulte que la lumière diffractée part perpendiculairement du combineur diffractif. Si on veut plutôt obtenir un axe observateur-image virtuelle en couleur incliné d'un angle $\ominus'$ par rapport à la normale du combineur, il suffit de réaliser un montage d'enregistrement dans lequel le faisceau R1 est incliné de l'angle $\ominus'$ par rapport à la normale de la couche photosensible 36. Dans ce cas, $\ominus_i$ correspond à l'angle entre R2 et la normale de la couche photosensible 36. L'angle entre R1 et R2 sera $\ominus_i$-$\ominus'$.

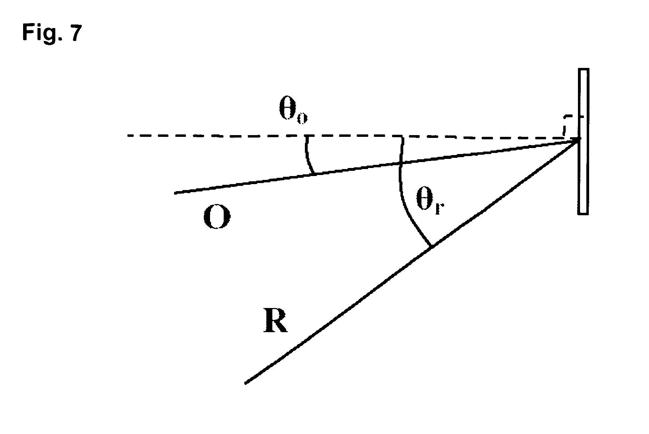

La figure 7 montre le cas plus général d'une configuration d'enregistrement dans laquelle les deux faisceaux d'écriture R1 et R2 forment un angle $\ominus_o$ respectivement $\ominus_r$ par rapport à la normale de la couche photosensible. Dans cette configuration, le pas d du réseau (simple) formé est donné par l'équation :

$$d = \lambda_e / (\sin(\theta_r) - \sin(\theta_o)) . \qquad \text{(Eq. 2)}$$

Lors de l'enregistrement d'un réseau multiplexé, la superposition des réseaux simples résulte en un pas de réseau variable (modulé) parce que l'on utilise plusieurs valeurs de $\ominus_r$. Dans la discussion suivante, nous allons toutefois considérer des réseaux simples.

Lors de l'utilisation du combineur, l'angle d'incidence $\ominus_p$ du faisceau provenant de l'unité de projection est donné par l'équation 1 (en substituant $\ominus_r$ pour $\ominus_i$). L'angle de diffraction $\ominus_d$ est donné par :

$$\theta_d = \arcsin(\lambda_i / d - \sin(\theta_p)) . \qquad \text{(Eq. 3)}$$

où $\lambda_i$ désigne de nouveau la longueur d'onde de la lumière de l'unité de projection.

Le tableau suivant donne deux exemples de configurations géométriques permettant d'illustrer l'écartement entre des rayons diffractés de différentes couleurs.

| | $\theta_p$ | $\lambda_i$ (nm) | $\theta_d$ (degrés) | écart angulaire B-V (degrés) | écart angulaire V-R (degrés) |
|---|---|---|---|---|---|
| **Cas 1** | 21 | 432 (bleu) | 0 | 5 | 4,8 |
| | | 532 (vert) | 5 | | |
| | | 633 (rouge) | 9,8 | | |
| | | | | | |
| **Cas2** | 54,2 | 432 (bleu) | -4,8 | 9,8 | 9,9 |
| | | 532 (vert) | 5 | | |
| | | 633 (rouge) | 14 | | |

Dans le cas 1 pour un angle $\theta_p$=20° l'écart angulaire entre les images bleue et verte est de 5°, et l'angle entre les images verte et rouge est de 4,8 degrés.

Pour un angle $\theta_p$=54,2° l'écart angulaire entre les images bleue et verte devient 9,8° et celui entre les images verte et rouge devient 9,9°. On remarque que lorsqu'on diminue le pas du réseau d, l'écart angulaire entre des images de couleurs différentes augmente.

Le contrôle de l'écart angulaire entre les images virtuelles parasites se fait donc par le choix de $\theta_p$ qui implique le choix de l'angle entre le faisceau de référence et le faisceau objet. Cet angle va déterminer le pas de réseau et par conséquent l'angle de diffraction.

Au cas où le combineur diffractif devrait réaliser une fonction de lentille, il faut adapter la distance entre la couche photosensible 36 et le centre des fronts d'onde sphériques du faisceau R2 selon la formule :

$$f_i = \frac{\lambda_e}{\lambda_i} \cdot f_e$$

où $f_i$ désigne la distance focale de la lentille voulue,

$f_e$ désigne la distance focale correspondante à l'onde sphérique R2,

$\lambda_e$ désigne la longueur d'onde du laser utilisé pour l'enregistrement de la lentille, et

$\lambda_i$ (i=1,2, 3) désigne la longueur d'onde de la lumière provenant du projecteur.

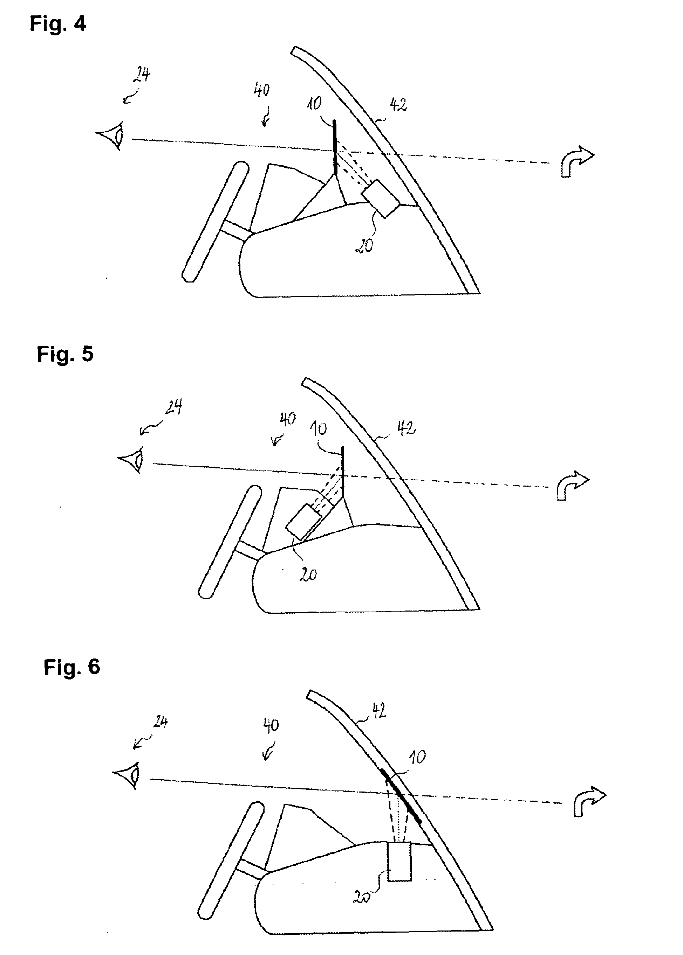

La figure 4 montre, de manière simplifiée, le tableau de bord 40 d'un véhicule automobile équipé d'un dispositif d'affichage tête haute tel que montré par exemple à la figure 2. Le combineur diffractif 10 est agencé pour fonctionner en transmission. Du point de vue de l'utilisateur 24, le combineur diffractif 10, positionné devant le pare-brise 42, est rétro-éclairé par l'unité de projection 20.

La figure 5 montre une réalisation alternative d'un dispositif d'affichage tête haute, dans lequel le combineur diffractif est agencé en réflexion. L'unité de projection 20 est située derrière le combiné d'instruments et éclaire le combineur diffractif de devant (vu par l'utilisateur). Une ou plusieurs couches de réflexion optique sont réalisées sur la face arrière (depuis le point de vue de l'utilisateur) du combineur diffractif pour réfléchir la lumière en provenance de l'unité de projection vers l'utilisateur. Ces couches de réflexion peuvent être des couches partiellement réfléchissantes ou dichroïques, adaptées pour les longueurs d'onde utilisées dans le projecteur.

Une autre variante est montrée à la figure 6. Ici, le combineur diffractif 10 fait partie du pare-brise 42. Plus particulièrement, les réseaux de diffraction optique multiplexé et non multiplexés sont réalisés en relief dans les surfaces d'une couche de matière plastique du pare-brise 42.

Légende:

| 10 | Combineur diffractif |
|---|---|
| 12 | Corps de support |
| 14 | Premier réseau de diffraction optique |
| 16 | Deuxième réseau de diffraction optique |
| 18 | Dispositif d'affichage tête haute |
| 20 | Unité de projection |
| 22 | Miroir |
| 24 | Utilisateur |
| 26 | Image virtuelle en couleur |
| 28 | Image source |
| 30 | Images virtuelles parasites |
| 32, 34 | Limite du champ de vision de l'utilisateur |
| 36 | Couche de résine photosensible |
| 38 | Substrat |
| 40 | Tableau de bord |
| 42 | Pare-brise |

**Revendications**

1. Combineur diffractif (10) pour dispositif d'affichage tête haute (18), ledit combineur comprenant un premier réseau de diffraction optique (14) configuré pour diffracter, dans une direction de diffraction, de la lumière d'une première longueur d'onde incidente sur ledit premier réseau de diffraction optique selon une direction d'incidence, un deuxième réseau de diffraction optique (16) configuré pour diffracter, dans ladite direction de diffraction, de la lumière d'une deuxième longueur d'onde incidente sur ledit deuxième réseau de diffraction optique selon ladite direction d'incidence, ledit combineur étant **caractérisé en ce qu'**il comprend

un support (12) en matière transparente ayant une première et une deuxième face opposées sur lesquelles sont formés en relief respectivement les premier (14) et deuxième (16) réseaux de diffraction optique, et **en ce qu'**au moins un des premier et deuxième réseaux de diffraction optique est un réseau de diffraction optique multiplexé en longueur d'onde configuré pour diffracter, dans ladite direction de diffraction, de la lumière d'une troisième longueur d'onde incidente sur ledit au moins un des premier et deuxième réseaux de diffraction optique selon ladite direction d'incidence.

2. Combineur diffractif (10) selon la revendication 1, dans lequel la lumière de la première longueur d'onde est de la lumière verte, la lumière de la deuxième longueur d'onde est de la lumière rouge et la lumière de la troisième longueur d'onde est de la lumière bleue.

3. Combineur diffractif (10) selon la revendication 1 ou 2, dans lequel ledit support (12) est réalisé en verre ou en matière plastique transparente.

4. Combineur diffractif (10) selon l'une quelconque des revendications 1 à 3, dans lequel les premier (14) et deuxième (16) réseaux de diffraction optique sont configurés de sorte à ce que ladite direction de diffraction corresponde au premier ordre de diffraction pour chacune desdites première, deuxième et troisième longueurs d'onde.

5. Combineur diffractif (10) selon l'une quelconque des revendications 1 à 4, dans lequel lesdits premier (14) et deuxième (16) réseaux de diffraction optique sont configurés pour réaliser une fonction de lentille de même distance focale pour la lumière des première, deuxième et troisième longueurs d'onde.

6. Dispositif d'affichage tête haute (18) comprenant
une unité de projection (20) apte à projeter un faisceau lumineux contenant de la lumière d'une première longueur d'onde, de la lumière d'une deuxième longueur d'onde et d'une troisième longueur d'onde à partir d'une image en couleur produite par superposition d'images monochromatiques de couleurs différentes, dont chacune correspond à respectivement une desdites longueurs d'onde ;
ainsi ce qu'un combineur diffractif (10) selon l'une quelconque des revendications 1 à 5, positionné par rapport à l'unité de projection (20) de sorte à recevoir le faisceau lumineux projeté par l'unité de projection selon ladite direction d'incidence et à diffracter au moins une partie de la lumière des première, deuxième et troisième longueurs d'onde du faisceau lumineux dans ladite direction de diffraction, pour ainsi créer dans le champ de vision d'un utilisateur (24) une image virtuelle en couleur (26) de l'image (28) produite par l'unité de projection.

7. Dispositif d'affichage tête haute (18) selon la revendication 6, dans lequel les premier (14) et deuxième (16) réseaux de diffraction optique du combineur diffractif (10) sont configurés pour positionner l'image virtuelle (26) à une distance comprise dans la plage de 1 à 3 m du combineur diffractif (10).

8. Dispositif d'affichage tête haute (18) selon la revendication 6 ou 7, en combinaison avec le combineur diffractif (10) selon la revendication 4, dans lequel les premier (14) et deuxième (16) réseaux de diffraction optique du combineur diffractif sont ajustés au positionnement du combineur diffractif (10) de sorte à placer des images virtuelles parasites (30) hors du champ de vision de l'utilisateur (24).

9. Dispositif d'affichage tête haute (18) selon la revendication 8, dans lequel la direction d'incidence et la direction de diffraction forment entre elles un angle supérieur à 30° pour ainsi placer les images virtuelles parasites (30) hors du champ de vision de l'utilisateur (24).

10. Dispositif d'affichage tête haute (18) selon l'une quelconque des revendications 6 à 9, dans lequel ledit combineur diffractif (10) est agencé pour fonctionner en transmission.

11. Dispositif d'affichage tête haute (18) selon l'une quelconque des revendications 6 à 10, dans lequel ledit combineur diffractif (10) est agencé pour fonctionner en réflexion.

12. Dispositif d'affichage tête haute (18) selon la revendication 11, dans lequel le combineur diffractif comprend une ou plusieurs couches de réflexion optique adaptées pour les longueurs d'onde utilisées dans l'unité de projection.

13. Dispositif d'affichage tête haute (18) selon l'une quelconque des revendications 6 à 9, dans lequel les efficacités de diffraction du combineur diffractif (10) pour les première, deuxième et troisième longueurs d'onde sont choisies en fonction du niveau de luminance de l'image virtuelle en couleur (26) et/ou en fonction de la pondération des couleurs correspondant aux première, deuxième et troisième longueurs d'onde dans l'image virtuelle (26).

14. Dispositif d'affichage tête haute (18) selon la revendication 13, dans lequel les efficacités de diffraction du combineur diffractif (10) sont ajustées par contrôle de la profondeur des reliefs des premier (14) et deuxième (16) réseaux de diffraction optique du combineur diffractif (10).

**Patentansprüche**

1. Diffraktiver Kombinierer (10) für eine Head-Up-Anzeigevorrichtung (18), wobei der Kombinierer ein erstes optisches Beugungsgitter (14) aufweist, das dazu ausgelegt ist, in einer Beugungsrichtung Licht mit einer ersten Wellenlänge zu beugen, das in einer Einfallsrichtung auf das erste optische Beugungsgitter einfällt, sowie ein zweites optisches Beugungsgitter (16), das dazu ausgelegt ist, in der genannten Beugungsrichtung Licht mit einer zweiten Wellenlänge zu beugen, das in der genannten Einfallsrichtung auf das zweite optische Beugungsgitter einfällt, wobei der Kombinierer **dadurch gekennzeichnet ist, dass** er enthält:

einen Träger (12) aus transparentem Material mit einer ersten und einer entgegensetzten zweiten Fläche, auf denen das erste (14) bzw. zweite (16) optische Beugungsgitter reliefartig ausgebildet sind, und dass zumindest eines aus erstem und zweitem optischen Beugungsgitter ein optisches Wellenlängen-Multiplex-Beugungsgitter ist, das dazu ausgelegt ist, in der genannten Beugungsrichtung Licht mit einer dritten Wellenlänge zu beugen, das in der Einfallsrichtung auf das zumindest eine aus erstem und zweitem optischen Beugungsgitter einfällt.

2. Diffraktiver Kombinierer (10) nach Anspruch 1, wobei das Licht mit der ersten Wellenlänge grünes Licht ist, das Licht mit der zweiten Wellenlänge rotes Licht ist und das Licht mit der dritten Wellenlänge blaues Licht ist.

3. Diffraktiver Kombinierer (10) nach Anspruch 1 oder 2, wobei der Träger (12) aus Glas oder aus transparentem Kunststoff hergestellt ist.

4. Diffraktiver Kombinierer (10) nach einem der Ansprüche 1 bis 3, wobei das erste (14) und das zweite (16) optische Beugungsgitter derart ausgelegt sind, dass die genannte Beugungsrichtung für jede der ersten, zweiten und dritten Wellenlänge der ersten Beugungsordnung entspricht.

5. Diffraktiver Kombinierer (10) nach einem der Ansprüche 1 bis 4, wobei das erste (14) und das zweite (16) optische Beugungsgitter derart ausgelegt sind, dass für das Licht der ersten, zweiten und dritten Wellenlänge eine Linsenfunktion mit gleicher Brennweite erfolgt.

6. Head-Up-Anzeigevorrichtung (18), enthaltend:

eine Projektionseinheit (20), die dazu geeignet ist, einen Lichtstrahl mit dem Licht einer ersten Wellenlänge, dem Licht einer zweiten Wellenlänge und einer dritten Wellenlänge ausgehend von einem Farbbild zu projizieren, das aus der Übereinanderlagerung von monochromatischen Bildern verschiedener Farben erzeugt wird, von denen jedes einer der genannten Wellenlängen entspricht; sowie einen diffraktiven Kombinierer (10) nach einem der Ansprüche 1 bis 5, der bezogen auf die Projektionseinheit (20) so positioniert ist, dass er den Lichtstrahl aufnimmt, der von der Projektionseinheit in der genannten Einfallsrichtung projiziert wird, und zumindest einen Teil des Lichts mit der ersten, zweiten und dritten Wellenlänge von dem Lichtstrahl in der Beugungsrichtung beugt, um so in dem Sichtfeld eines Benutzers (24) ein virtuelles Farbbild (26) aus dem Bild (28) zu erzeugen, das von der Projektionseinheit erzeugt wird.

7. Head-Up-Anzeigevorrichtung (18) nach Anspruch 6, wobei das erste (14) und das zweite (16) optische Beugungsgitter des diffraktiven Kombinierers (10) dazu ausgelegt sind, das virtuelle Bild (26) in einer Entfernung zu positionieren, die in dem Bereich von 1 bis 3 m vom diffraktiven Kombinierer (10) liegt.

8. Head-Up-Anzeigevorrichtung (18) nach Anspruch 6 oder 7 in Kombination mit dem diffraktiven Kombinierer (10) nach Anspruch 4, wobei das erste (14) und das zweite (16) optische Beugungsgitter des diffraktiven Kombinierers auf die Positionierung des diffraktiven Kombinierers (10) so abgestimmt sind, dass virtuelle Störbilder (30) außerhalb des Sichtfelds des Benutzers (24) platziert werden.

9. Head-Up-Anzeigevorrichtung (18) nach Anspruch 8, wobei die Einfallsrichtung und die Beugungsrichtung einen Winkel größer als 30° einschließen, um so die virtuellen Störbilder (30) außerhalb des Sichtfelds des Benutzers (24) zu platzieren.

10. Head-Up-Anzeigevorrichtung (18) nach einem der Ansprüche 6 bis 9, wobei der diffraktive Kombinierer (10) dazu vorgesehen ist, in Transmission betrieben zu werden.

11. Head-Up-Anzeigevorrichtung (18) nach einem der Ansprüche 6 bis 10, wobei der diffraktive Kombinierer (10) dazu vorgesehen ist, in Reflexion betrieben zu werden.

12. Head-Up-Anzeigevorrichtung (18) nach Anspruch 11, wobei der diffraktive Kombinierer eine oder mehrere optische Reflexionsschichten aufweist, die für die Wellenlängen geeignet sind, die bei der Projektionseinheit Anwendung finden.

13. Head-Up-Anzeigevorrichtung (18) nach einem der Ansprüche 6 bis 9, wobei die Beugungseffizienzen des diffraktiven Kombinierers (10) für die erste, die zweite und die dritte Wellenlänge in Abhängigkeit von dem Helligkeitsniveau des virtuellen Farbbilds (26) und/oder in Abhängigkeit von der Gewichtung der Farben gewählt werden, die der ersten, der zweiten und der dritten Wellenlänge im virtuellen Bild (26) entsprechen.

14. Head-Up-Anzeigevorrichtung (18) nach Anspruch 13, wobei die Beugungseffizienzen des diffraktiven Kombinierers (10) durch Kontrolle der Tiefe der Reliefs des ersten (14) und des zweiten (16) optischen Beugungsgitters des diffraktiven Kombinierers (10) abgestimmt werden.

**Claims**

1. Diffractive combiner (10) for a head-up display device (18), said combiner comprising a first optical diffraction grating (14) configured to diffract, in a diffraction direction, light of a first wavelength incident on said first optical diffraction grating in a direction of incidence, and a second optical diffraction grating (16) configured to diffract, in said diffraction direction, light of a second wavelength incident on said second optical diffraction grating in said direction of incidence, said combiner being **characterized in that** it comprises:

   a carrier (12) made of transparent material having first and second opposite faces on which are formed in relief the first (14) and second (16) optical diffraction gratings, respectively, and **in that** at least one of the first and second optical diffraction gratings is a wavelength-multiplexed optical diffraction grating configured to diffract, in said diffraction direction, light of a third wavelength incident on said at least one of the first and second optical diffraction gratings in said direction of incidence.

2. Diffractive combiner (10) according to Claim 1, in which the light of the first wavelength is green light, the light of the second wavelength is red light and the light of the third wavelength is blue light.

3. Diffractive combiner (10) according to Claim 1 or 2, in which said carrier (12) is made of glass or of a transparent plastic.

4. Diffractive combiner (10) according to any one of Claims 1 to 3, in which the first (14) and second (16) optical diffraction gratings are configured so that said diffraction direction corresponds to the first order of diffraction for each of said first, second and third wavelengths.

5. Diffractive combiner (10) according to any one of Claims 1 to 4, in which said first (14) and second (16) optical diffraction gratings are configured to provide a lens function of the same focal length for the light of the first, second and third wavelengths.

6. Head-up display device (18) comprising:

   a projection unit (20) able to project a light beam containing light of a first wavelength, light of a second wavelength and of a third wavelength from a colour image produced by superposing monochromatic images of different colours, each of which corresponds to one of said wavelengths, respectively;
   and a diffractive combiner (10) according to any one of Claims 1 to 5, positioned relative to the projection unit (20) so as to receive the light beam projected by the projection unit in said direction of incidence and to diffract at least some of the light of the first, second and third wavelengths of the light beam in said diffraction direction, in order thus to create in the field of vision of a user (24) a colour virtual image (26) of the image (28) produced by the projection unit.

7. Head-up display device (18) according to Claim 6, in which the first (14) and second (16) optical diffraction gratings of the diffractive combiner (10) are configured to position the virtual image (26) at a distance comprised in the range from 1 to 3 m from the diffractive combiner (10).

8. Head-up display device (18) according to Claim 6 or 7, in combination with the diffractive combiner (10) according to Claim 4 in which the first (14) and second (16) optical diffraction gratings of the diffractive combiner are adjusted to the positioning of the diffractive combiner (10) so as to place ghost virtual images (30) outside of the field of view of the user (24).

9.  Head-up display device (18) according to Claim 8, in which the direction of incidence and the diffraction direction make to each other an angle larger than 30° in order thus to place the ghost virtual images (30) outside of the field of view of the user (24).

10. Head-up display device (18) according to any one of Claims 6 to 9, in which said diffractive combiner (10) is arranged to function in transmission.

11. Head-up display device (18) according to any one of Claims 6 to 10, in which said diffractive combiner (10) is arranged to function in reflection.

12. Head-up display device (18) according to Claim 11, in which the diffractive combiner comprises one or more optical reflection layers suitable for the wavelengths used in the projection unit.

13. Head-up display device (18) according to any one of Claims 6 to 9, in which the diffraction efficiencies of the diffractive combiner (10) for the first, second and third wavelengths are chosen depending on the brightness level of the colour virtual image (26) and/or depending on the weighting of the colours corresponding to the first, second and third wavelengths in the virtual image (26).

14. Head-up display device (18) according to Claim 13, in which the diffraction efficiencies of the diffractive combiner (10) are adjusted by controlling the depth of the reliefs of the first (14) and second (16) optical diffraction gratings of the diffractive combiner (10).

**Fig. 1**

**Fig. 3**

**Fig. 2**

EP 2 548 054 B1

**Fig. 4**

**Fig. 5**

**Fig. 6**

**Fig. 7**

**EP 2 548 054 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 10048562 B
- EP 0467328 A
- US 4930847 A
- US 6005714 A
- US 2007188837 A1
- US 2003210467 A1